# EUROPEAN PATENT APPLICATION

(11) **EP 2 848 635 A1**
(43) Date of publication of application: **18.03.2015**
(21) Application number: 13184615.6
(22) Date of filing: 16.09.2013
(51) Int. Cl.: C08F 2/01, C08F 2/34, C08F 2/14

(54) **Polymerization process**

(71) Applicant: Ineos Europe AG, 1180 Vaud (CH)
(72) Inventor: The designation of the inventor has not yet been filed
(74) Representative: King, Alex

(57) **Abstract**

The present invention relates to a process for the introduction of a fresh feed selected from fresh comonomer and fresh inert hydrocarbon to a polymerisation reaction system, and in particular to a process for the introduction of a fresh feed selected from fresh comonomer and fresh inert hydrocarbon to a polymerisation reaction in a polymerisation reaction system comprising:
(i) a reactor having one or more withdrawal lines for withdrawal of a polymer-containing stream, and
(ii) a recycle system for recycling reactants removed from the reactor in the withdrawn polymer-containing stream back to the reactor and which recycle system comprises a low pressure separator at a pressure of less than 0.4 MPa (4 bar) for separating a process stream comprising components to be recycled into condensed liquid components to be recycled and gaseous components to be recycled,

which process comprises also feeding fresh inert hydrocarbon and/or fresh comonomer to the low pressure separator.

## Description

The present invention relates to a process for the introduction of a fresh feed selected from fresh comonomer and fresh inert hydrocarbon to a polymerisation reaction system, and in particular to a process where fresh comonomer and/or fresh inert hydrocarbon liquids are fed to a low pressure separator on the recycle system.

The polymerisation of olefins to form polymers such as polyethylenes and polypropylenes is well-known.

One example of a known process is a slurry phase process. In one example of such a process, a slurry of polymer solids in a liquid diluent is circulated in a loop reactor. A slurry of polymer solids is removed from the reactor, and the polymer solids separated from the bulk of the diluent and unreacted monomers. The separation usually involves several stages. For example, a relatively high pressure flash stage may be used where diluent and other components of the liquid phase are flashed to a vapour, but at a pressure high enough that they can be recondensed without compression. This enables a majority of the diluent and other components to be recycled without compression. However, the polymer solids will generally still contain diluent, reactants and other constituents of the reaction mixture which are entrained with or absorbed on the polymer. These are usually separated at lower pressure either by a further flash step or by purging, for example with an inert gas. It is also desired to recycle these components, after separation of any purge gas if used.

Fresh feeds (monomer, comonomer, diluent etc.) are fed to the process to replace consumed reactants and other components which may have been "lost" (e.g. purged or vented) from the reactor system.

Another example of a known process is the gas phase fluidised bed polymerisation process. In such a process a bed of growing polymer particles is maintained in a fluidised state by an ascending stream of a fluidising gas comprising monomer and other reactants.

The fluidising gas exiting the top of the reactor is recycled to the base of the reactor by an external recycle loop, usually involving at least one step by which the gas is cooled.

Polymer is generally removed from the reactor at approximately the rate it is formed to thereby maintain the volume and/or height of the bed of fluidised polymer particles in the reactor. The withdrawn polymer is treated to separate reactants and other constituents of the reaction mixture which are entrained with or absorbed on the withdrawn polymer, in a process which is generally referred to as degassing. The separated reactants are then recycled to the reactor. Fresh feeds are fed to the process to replace consumed reactants and other components which may have been "lost" (e.g. purged or vented) from the reactor system.

It is known to feed fresh feeds directly to the reactor in either gas or slurry phase processes, or directly to the recycle loop by which the fluidising gas exiting the top of the reactor is recycled in a fluidised bed gas phase process. We have now found that it is advantageous to feed fresh comonomer feed and/or fresh inert hydrocarbon feeds to a low pressure separator which is part of the recycle system by which the separated reactants and other constituents of the reaction mixture which are entrained with or absorbed on the withdrawn polymer are recycled to the reactor.

Thus, in a first aspect the present invention provides a process for the introduction of a fresh feed selected from fresh comonomer and fresh inert hydrocarbon to a polymerisation reaction in a polymerisation reaction system comprising:
(i) a reactor having one or more withdrawal lines for withdrawal of a polymer-containing stream, and
(ii) a recycle system for recycling reactants removed from the reactor in the withdrawn polymer-containing stream back to the reactor and which recycle system comprises a low pressure separator at a pressure of less than 0.4 MPa (4 bar) for separating a process stream comprising components to be recycled into condensed liquid components to be recycled and gaseous components to be recycled,
which process comprises also feeding fresh inert hydrocarbon and/or fresh comonomer to the low pressure separator.

The polymerisation reaction in the present invention is preferably a process for the polymerisation of olefins, more preferably for polymerisation ethylene or propylene, and most preferably for the polymerisation of ethylene.

As used herein a comonomer is a monomer other than the "principal monomer" which it is desired to polymerise, the principal monomer being that which is present in the final product in the largest amount by weight (e.g. ethylene).

Examples of comonomers, when used, depend on the principal monomer, but for ethylene or propylene polymerisation processes the comonomer is preferably selected from C4 to C10 alpha-olefins, and most preferably is selected from 1-butene, 1-hexene and 1-octene.

Fresh inert hydrocarbons may be used as a diluent in a slurry phase polymerisation reaction or as a condensing agent in a gas phase polymerisation reaction. In particular, the polymerisation of olefins in a fluidised bed polymerisation reaction is highly exothermic, and the reaction components exit the reactor at higher temperature than they enter, and are then cooled in the recycle loop.

A particularly preferred process in a gas phase reaction involves cooling the gaseous reaction mixture exiting the reactor to a temperature low enough that some components condense to form liquids, which liquids are then introduced to the reactor. The vaporisation of the liquids in the reactor acts to absorb some of the exothermic heat of reaction. One example is described, for example, in WO 94/28032, the process described therein allowing liquid and gas streams to be separately returned to the polymerisation reactor. Condensable inert hydrocarbons, such as alkanes, and most especially alkanes such as pentanes and hexanes, are added process deliberately for this purpose. Although inert to the reaction, small amounts of such components can nevertheless be "lost" with the withdrawn polymer or in process vents or purges, and thus fresh inert hydrocarbons must be added to replace that "lost".

Preferably therefore, the fresh inert hydrocarbon is an alkane, and more preferably one having 4 to 8 carbon atoms.

For a slurry polymerisation process the fresh inert hydrocarbon is preferably isobutane. For a gas phase polymerisation process the fresh inert hydrocarbon is preferably is a pentane or hexane, and most preferably is, or comprises, n-pentane.

The "polymerisation reaction system" is preferably a gas phase polymerisation reaction system, and the present invention will hereinafter be illustrated with respect to this option. However, a similar low pressure separator may be present in the system by which diluent, reactants and other constituents of the reaction mixture which are entrained with or absorbed on the polymer are usually separated at lower pressure in a slurry polymerisation process, and much of the description of the low pressure separator below will apply equally to such a process. In particular, for the gas phase system described below the recycle system is defined in terms of being the system for recycling reactants removed from the reactor in the withdrawn polymer-containing stream back to the reactor. In a slurry phase process the recycle system for recycling reactants removed from the reactor in the withdrawn polymer-containing stream back to the reactor and which recycle system comprises a low pressure separator at a pressure of less than 0.4 MPa (4 bar) will usually be part of the system by which reactants and diluents which have been separated at relatively low pressure, such that they require compression before they can be condensed with cooling water, are recycled to the reactor. In contrast, the whole point of high pressure flash systems in slurry polymerisation processes it to enable separation and recycle of diluent and monomer at relatively high pressures, and hence the recycle of components from a high pressure flash step would not usually include any low pressure separator as defined herein.

The gas phase polymerisation reaction system will generally comprise
(i) a gas phase reactor having a gas outlet and one or more withdrawal lines for withdrawal of a polymer-containing stream,
(ii) a recycle loop for recycling gas exiting the reactor through the gas outlet back to the reactor,
(iii) a polymer separation system for separating reactants and other reaction components from the polymer product in the withdrawn polymer-containing stream, and
(iv) a recycle system for recycling reactants and other reaction components removed from the reactor in the withdrawn polymer-containing stream back to the reactor.

As used herein in the context of a gas phase reaction system, the term "recycle loop" refers to the entire system by which the gas exiting the reactor through the gas outlet is recycled back to the reactor. For avoidance of doubt this includes the possibility, which is in fact preferred, that a portion of the gas is cooled and condensed to form liquid before it is recycled to the reactor. The recycle loop can also include vents and fresh feed lines, for example for monomer.

The term "polymer separation system" refers to the system by which reactants and other reaction components (such as inert hydrocarbons) are separated from polymer product in the withdrawn polymer-containing stream. These can include lock hoppers for product withdrawal and what are known in the art as degassing and/or purging steps for subsequent polymer treatment.

The term "recycle system" in the context of a gas phase reaction system refers to the system by which reactants and other reaction components (such as inert hydrocarbons) removed from the reactor in the withdrawn polymer-containing stream and subsequently separated therefrom are recycled back to the reactor. The recycle system may recycle streams back to the recycle loop rather than directly back to the reactor. As used herein, reference to the recycle system recycling "back to the reactor" includes that the recycle can take place via the recycle loop, and in this case, for the purposes of the present invention, the "recycle system" is considered to end at the recycle loop. (Any subsequent steps and pipes by which recycle to the reactor occurs are part of the recycle loop.) The recycle system may, and typically does, recycle different recycle streams from different processing steps in the polymer separation system. The streams may include both gaseous and liquid recycle streams depending on the processing step, and in particular the pressure, temperature and stream composition. The recycle system can also include vents.

According to the present invention the recycle system comprises a low pressure separator at a pressure of less than 0.4 MPa (4 bar) for separating a process stream comprising components to be recycled into condensed liquid components to be recycled and gaseous components to be recycled, and fresh inert hydrocarbon and/or fresh comonomer are fed to this low pressure separator.

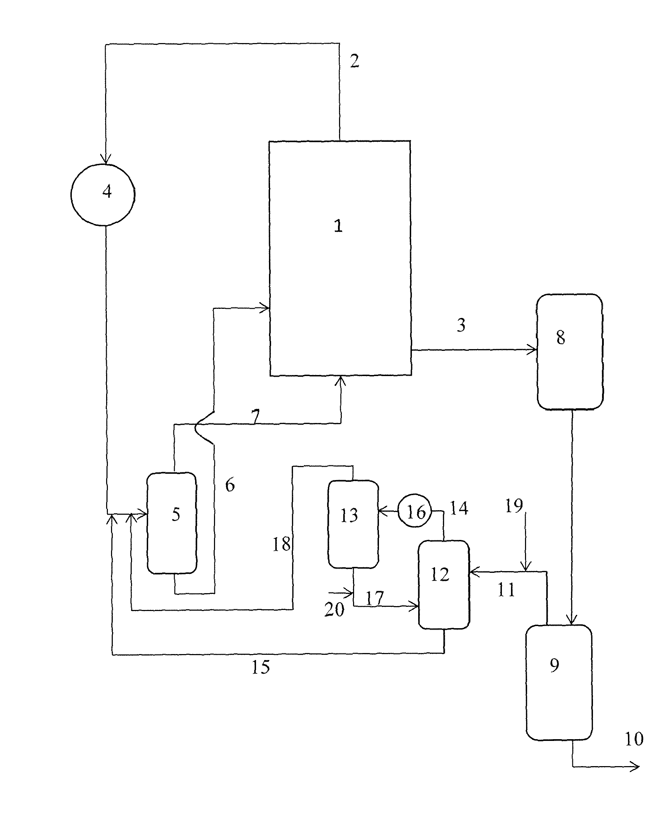

The different parts of the gas phase polymerisation reaction system may be illustrated with respect to Figure 1, which is a schematic of one embodiment of the present invention provided to illustrate some of the terms defined above.

Thus, with respect to Figure 1, there is shown a gas phase reactor (1), having a gas outlet (2) and a withdrawal line for withdrawal of a polymer-containing stream (3). The reaction system comprises a recycle loop comprising a condenser (4) and high pressure separator (5), for separating condensed liquid from non-condensed gas. (The recycle loop is generally at high pressure, the term "high pressure" being used herein to refer to pressures above 0.5 MPa. The term "high pressure separator" therefore distinguishes the separator (5) from the low pressure separator in the recycle system which is described below. Similarly, the term "low pressure" as used herein refers to pressures of 0.5 MPa and below unless more specifically defined (as it is for the low pressure separator, for example).)

The recycle loop also comprises a liquid recycle line (6) for passing condensed liquid back to the reactor (1) and a gas recycle line (7) for passing the non-condensed gas back to the reactor (1).

The polymer-containing stream withdrawn through line 3 is passed to a polymer separation system having processing steps represented schematically by vessels (8) and (9). In particular, vessel (8) represents schematically one or more lock hoppers which are vessels commonly used to aid withdrawal of the polymer from the high pressure in the reactor (1) with a minimum of gaseous reactants and other reaction components, and vessel (9) represents schematically a degassing step. With respect to (9) one example of such a vessel is a splitter in which unreacted reactants and other gaseous components are separated from polymer at low pressure (and lower than that in the lock hopper (8)). Polymer is withdrawn via line (10) and passed for further processing, such as further degassing, for example purging with an inert gas and/or extrusion (not shown).

A mixture of reactants including unreacted olefin and other reaction components are recovered from the degassing step (9) via line (11), and passed to a recovery system comprising a low pressure separator (12) and a condensate separator (13).

From the low pressure separator (12) are recovered a liquid recycle stream (15) comprising condensed liquid components to be recycled and a gaseous stream (14), comprising gaseous components to be recycled. The low pressure separator is at a pressure of less than 0.4 MPa (4 bar) and the gaseous stream is compressed and cooled (17) and passed to a condensate separator (13). Condensate is recovered from the condensate separator and passed back to the low pressure separator. Uncondensed gaseous components, comprising monomer, are recycled to the reactor as a gaseous recycle stream (18).

The liquid recycle stream (15) and gaseous recycle stream (18), now at higher pressure, can pass directly back to the reactor (1) but in Figure 1 are shown connecting to the recycle loop, and in particular to the line just upstream of the high pressure separator (5), and from there the streams are recycled to the reactor (1).

Also shown in Figure 1 are two potential feed lines for introducing fresh comonomer and/or fresh inert hydrocarbon to the low pressure separator. Thus, line (19) can introduce fresh comonomer and/or fresh inert hydrocarbon to the low pressure separator (12) via line (11); whilst line (20) introduces fresh comonomer and/or fresh inert hydrocarbon via line (17). A direct feed to the low pressure separator (12) is a further option (not shown).

As shown in Figure 1 and as defined herein, each of 1-18 are part of the reaction system (whereas lines 19 and 20 are not part of the reaction system but are feed lines thereto). In particular, 2-7 represent the recycle loop, 8 and 9 represent part of the polymer separation system, and 11-18 represent a recycle system for the components separated in vessel (9). As defined herein the recycle system in Figure 1 ends at the points where lines 15 and 18 meet the recycle loop upstream of the high pressure separator (5).

According to the present invention fresh comonomer and/or fresh inert hydrocarbon are fed to the low pressure separator. It is understood that the polymer reaction system is a circulating system, and hence comonomer and inert hydrocarbon introduced into the reactor may pass to the low pressure separator (via the polymer withdrawal line(s) and polymer separation system).

In the present invention, "feeding fresh inert hydrocarbon and/or fresh comonomer to the low pressure separator" means that said components are fed directly to the low pressure separator or upstream of the low pressure separator, with the provisos that if fed upstream of the low pressure separator the location of introduction must be such that the pressure at the point of introduction is 0.5 MPa or below (i.e. the introduction is to a "low pressure" part of the reaction/recycle system), and at least 90wt% of any fresh comonomer and fresh inert hydrocarbon fed is passed to the low pressure separator before passage through the reactor.

The term "separator" as used herein means a process unit in which separation of vapour and liquid streams can occur. As used herein, however, the term "low pressure separator" does not encompass a "stripper", which is a column or other vessel to which a gas is provided to separate volatile components from a liquid. Examples of suitable low pressure separators according to the present invention include vapour/liquid separation vessels and fractionation columns. In a vapour/liquid separation vessel a mixture of vapour and liquid is separated by allowing a liquid phase to form in the base of the vessel with a vapour phase above. The liquid phase can then be readily withdrawn from the base, and the vapour overhead. This may be considered as a "single stage" separation vessel in that the vessel may be considered to comprise just one contacting stage. In a fractionation column, in contrast, multiple stages are provided in which vapour passing upwards contacts condensing liquid flowing downwards, such that the vapour becomes enriched in more volatile components and the liquid becomes enriched in the heavier components.

Preferably, the low pressure separator according to the present invention is not a fractionation column, and more preferably is a single stage separation vessel, and most preferably a vapour/liquid separation vessel. In particular, the advantages detailed further herein are reduced when a fractionation column is used rather than a vapour/liquid or other single stage separation vessel.

The low pressure separator is used to separate a process stream comprising components to be recycled into condensed liquid components to be recycled and gaseous components to be recycled. The process stream will usually comprise monomer and inert hydrocarbons to be recycled. When the process uses a comonomer then the process stream will also usually comprise said comonomer.

The process stream is preferably not from a separation step in which polymer particles are purged with an inert gas, such as nitrogen. Generally the process stream comprises less than 60mol% of nitrogen, and more preferably contains relatively low levels of nitrogen compared to monomer, comonomer (where used) and inert hydrocarbon components. (Nitrogen may still build up in the process, and hence be present in the process stream however even if it doesn't derive directly from a separation step in which nitrogen is used as a purge gas.)

The process stream is preferably passed from the separation step wherein it has been separated from polymer particles to the low pressure separator of the present invention without passing through any compression step. The separation step wherein the process stream has been separated from polymer particles is preferably at low pressure i.e. a pressure of less than 0.5MPa (5 bar).

The process stream is preferably passed from the separation step wherein it has been separated from polymer particles to the low pressure separator without any treatment with the exception that it may be cooled as discussed further below.

It can be noted that from the separation step wherein the process stream is separated from the polymer, the process stream is generally separated as a gaseous stream. The process stream is preferably gaseous or predominantly gaseous (i.e. at least 50mol% of the stream is gaseous) when passed to the low pressure separator in the present invention. Although some condensation of the stream can occur between its separation from the polymer and it being passed to the low pressure separator if the stream is cooled, preferably 70-100% by moles of the stream is gaseous when passed to the low pressure separator.

The process stream to the low pressure separator will preferably comprise at least 25mol% monomer and comonomer (i.e. at least 25mol% monomer when no comonomer is used or at least 25mol% of monomer and comonomer in total when both are used), such as 30-60mol% of monomer and comonomer. The majority of the remainder of the process stream is usually inert hydrocarbon used as diluent or condensing agent (depending on the process), for example in amounts of 5-20mol%, nitrogen, for example 5-30mol%, and hydrogen, for example 0-30mol%. Smaller amounts still of other reaction components are usually present, to include alkane impurities, such as methane and ethane, and internal olefin impurities, such as 2-butene or 2-hexene.

There is recovered from the low pressure separator a gaseous stream comprising gaseous components to be recycled, and in particular monomer, and a condensed liquid stream comprising condensed liquid components to be recycled, and in particular comonomer from the process stream, as well as any fresh comonomer fed to the low pressure separator and/or any fresh inert hydrocarbon fed to the low pressure separator.

In the present invention the gaseous stream recovered from the low pressure separator will generally comprise the majority of any monomer passed to the low pressure separator in the process stream i.e. greater than 50wt% of the monomer from the process stream. Preferably, the gaseous stream recovered from the low pressure separator will comprise at least 80wt% of the monomer from the process stream, more preferably at least 90wt%, and most preferably at least 95wt% of the monomer from the process stream.

The condensed liquid stream recovered from the low pressure separator in the present invention will generally comprise the majority of any comonomer and/or inert hydrocarbon fed to the separator i.e. greater than 50wt% of the comonomer from the process stream and greater than 50wt% of the fresh inert hydrocarbon/fresh comonomer.

In the process of the present invention the condensation of heavier components such as comonomer and inert hydrocarbon to form the condensed liquid components to be separated in the low pressure separator can be increased by reducing the temperature in the low pressure separator. For example, the fresh feed stream and/or the process stream comprising components to be recycled may be cooled prior to the low pressure separator to enhance the amount of condensation.

In a particularly preferred embodiment, which may be utilised independently or in addition to any cooling of the fresh feed stream and/or the process stream comprising components to be recycled, the gaseous stream recovered from the low pressure separator is compressed and cooled, wherein heavier components therein are condensed, and this condensate is separated from the non-condensed components of the gaseous stream and recycled to the low pressure separator. This increases the recovery of heavier components such as comonomer and inert hydrocarbon recovered in the condensed liquid stream from the low pressure separator.

Preferably, the condensed liquid stream comprises at least 80wt% of the comonomer from the process stream and at least 80wt% of the fresh inert hydrocarbon/fresh comonomer, more preferably at least 90wt% of the comonomer from the process stream and at least 90wt% of the fresh inert hydrocarbon/fresh comonomer, and most preferably at least 95wt% of the comonomer from the process stream and at least 95wt% of the fresh inert hydrocarbon/fresh comonomer.

Thus, most preferably, there is fed to the low pressure separator process stream comprising monomer and comonomer to be recycled, and there are recovered from the low pressure separator:
(a) a condensed liquid stream comprising at least 95wt% of the comonomer from the process stream and at least 95wt% of the fresh inert hydrocarbon/fresh comonomer and
(b) a gaseous stream comprising at least 95wt% of the monomer from the process stream.

The gaseous stream is removed from the low pressure separator, by definition, at low pressure, and prior to feeding to the reactor as a gaseous recycle stream needs to be compressed. A particular advantage of the embodiment described above where the gaseous stream exiting the low pressure separator is compressed and cooled such that heavier components therein are condensed and separated from the non-condensed components is that no further compression of the non-condensed components is required.

Even when cooling and condensate separation is applied to the gaseous stream recovered from the low pressure separator the vast majority of the monomer therein remains as a non-condensed component.

Thus, it is also the case that there is recycled to the reactor from the gaseous stream removed from the low pressure separator, via a gaseous recycle stream, the majority of any monomer passed to the low pressure separator in the process stream i.e. greater than 50wt% of the monomer from the process stream, preferably at least 80wt% of the monomer from the process stream, more preferably at least 90wt%, and most preferably at least 95wt% of the monomer from the process stream.

An advantage of the present invention is the ability to inject fresh feed components to the polymerisation reaction system at relatively low pressure. In particular, separate pumps for injection of fresh comonomer and/or fresh inert hydrocarbons at high pressure (i.e. as required if injecting directly into the reactor or the recycle loop) are not required. Although the fresh feeds still have to be pumped from the low pressure separator to the reactor, the present invention utilises an existing system already operating on the liquid components of the process stream to be recycled.

This can result in significant cost savings.

The present invention may take place in gas phase reactor as already noted. The reactor is preferably a fluidised bed gas phase reactor. A preferred reactor is a vertically orientated gas phase fluidised bed reactor. Reactors of this type, and their operation, are well-known in the art. They are described, for example, in US 4588790, US 5352749 and WO 94/28032 already noted above. (The term "vertically orientated" simply means that the axis of the cylindrical reactor is orientated in the vertical direction.)

The reactor generally comprises a cylindrical reaction zone of the defined diameter at the top of which is located a disengagement zone. The disengagement zone is usually an expanded section in the form of an expanded cylindrical section or an inverted cone.

The reaction zone has a fluidisation grid at its base. In operation the fluidising gas is thus passed upwardly through the fluidisation grid, through the reaction zone wherein it fluidises the particles therein, and into the disengagement zone, and is then withdrawn from the top of the reactor via the one or more withdrawal lines, usually from the top or close to the top of the disengagement zone.

Withdrawn fluidising gas is usually cooled and recycled to the base of the reactor as fluidising gas, as already described.

The reaction zone preferably has a diameter of at least 4 metres, such as at least 4.5 metres and more preferably at least 5 metres. The diameter is preferably less than 10 metres, and more preferably less than 8 metres .

The fluidising gas is passed through the reactor at a velocity sufficient to fluidise the particles in the reaction zone. Typically this may be between 0.2 and 0.8 m/s.

Polymerisation is generally performed in a reaction zone at a pressure (at steady-state) between 1 and 5 MPa, preferably between 1.5 and 2.5 MPa. (As used herein all pressures are reported as "absolute" not "gauge" unless otherwise stated.) The reactor temperature may be from 30° to 180°C, preferably from 80° to 120°C.

Polymerisation catalyst is injected to the reactor during polymerisation. A large number of catalysts suitable to catalyse polymerisation are known, and any suitable catalyst may be used in the process of the present invention, either in gas or slurry phase. Commercially-used catalysts include Phillips catalysts, Ziegler catalysts and metallocene catalysts. It is also known to use mixed catalysts.

It is also known to use co-catalysts or other additives that can be added with the catalyst to the polymerisation reactor, for example alkyl aluminium co-catalysts; external donors, such as silanes; and continuity additives, such as antistatic agents.

The steady-state production rate of polymer in the reactor can depend on the polymer to be produced, but typical commercial rates are generally at least 20 tonnes/hr, such as at least 30 tonnes/hr, and more generally at least 50 tonnes/hr. The production rate may also be defined in terms of the space-time-yield, which is a measurement of the production rate per unit volume of the reactor. The present invention is preferably operated at a space-time-yield of at least 100kg/hr/m3, such as at least 120 kg/h/m3 and more generally at least 140 kg/h/m3. (The term "steady-state", as used herein, refers to operation where the aim is to maintain a substantially constant hourly production of a polymer of a particular grade. The "grade" refers to the properties of the polymer, being defined in particular by the density and melt index, although other properties can also be used to distinguish different grades, such as the catalyst type used (e.g. chromium, Ziegler, metallocene)or the comonomer used (e.g. 1-butene, 1-hexene, 1-octene).)

A reactor may be operated to produce a single grade of polymer, or may be used to produce multiple grades of polymer by variation of conditions in the reactor. The process of changing from (steady-state) production of one polymer grade to (steady-state) production of another grade is generally referred to as transitioning. A particular example is a "continuous transition" which as used herein is a transition in which polymerisation takes place throughout the transition. A "continuous transition" can be accomplished for example by maintaining reactive conditions, but simply adjusting the conditions, such as changing one or more reactant feeds and/or temperature to change the polymer grade being produced. As another example, a "continuous transition" involving a change of catalyst can be accomplished by stopping feed of one catalyst, adjusting the reactor conditions, and starting feed of the second catalyst whilst maintaining production.

The reactor of the present invention may be a "stand-alone" reactor, or may be one of a number of reactors, including one of two or more reactors operated in series. Where other reactors are present in series they may also be the same or may be another type of reactor.

## Claims

1. A process for the introduction of a fresh feed selected from fresh comonomer and fresh inert hydrocarbon to a polymerisation reaction in a polymerisation reaction system comprising:
(i) a reactor having one or more withdrawal lines for withdrawal of a polymer-containing stream, and
(ii) a recycle system for recycling reactants removed from the reactor in the withdrawn polymer-containing stream back to the reactor and which recycle system comprises a low pressure separator at a pressure of less than 0.4 MPa (4 bar) for separating a process stream comprising components to be recycled into condensed liquid components to be recycled and gaseous components to be recycled,
which process comprises also feeding fresh inert hydrocarbon and/or fresh comonomer to the low pressure separator.

2. A process according to claim 1 wherein the polymerisation reaction is the polymerisation of ethylene or propylene, preferably the polymerisation of ethylene.

3. A process according to claim 1 or claim 2 wherein the comonomer is selected from C4 to C10 alpha-olefins, and most preferably is selected from 1-butene, 1-hexene and 1-octene.

4. A process according to any one of the preceding claims wherein the polymerisation reaction system is a gas phase polymerisation reaction system or a slurry polymerisation reaction system.

5. A process according to any one of the preceding claims wherein the polymerisation reaction system is a gas phase polymerisation reaction system and the fresh inert hydrocarbon is an alkane, and more preferably is a pentane or hexane, and most preferably is, or comprises, n-pentane.

6. A process according to any one of the preceding claims wherein the "polymerisation reaction system" is a gas phase polymerisation reaction system and comprises
(i) a gas phase reactor having a gas outlet and one or more withdrawal lines for withdrawal of a polymer-containing stream,
(ii) a recycle loop for recycling gas exiting the reactor through the gas outlet back to the reactor,
(iii) a polymer separation system for separating reactants and other reaction components from the polymer product in the withdrawn polymer-containing stream, and
(iv) a recycle system for recycling reactants and other reaction components removed from the reactor in the withdrawn polymer-containing stream back to the reactor.

7. A process according to any one of the preceding claims wherein the process stream is not from a separation step in which polymer particles are purged with an inert gas, such as nitrogen.

8. A process according to any one of the preceding claims wherein the process stream is passed from the separation step wherein it has been separated from polymer particles to the low pressure separator without passing through any compression step.

9. A process according to any one of the preceding claims wherein the separation step wherein the process stream has been separated from polymer particles is at a pressure of less than 0.5MPa (5 bar).

10. A process according to any one of the preceding claims wherein the process stream is passed from the separation step wherein it has been separated from polymer particles to the low pressure separator without any treatment with the exception that it may be cooled.

11. A process according to any one of the preceding claims wherein the process stream is gaseous or predominantly gaseous (i.e. at least 50mol% of the stream is gaseous) when passed to the low pressure separator, and preferably 70-100% by moles of the stream is gaseous when passed to the low pressure separator.

12. A process according to any one of the preceding claims wherein the process stream to the low pressure separator comprises at least 25mol% monomer and comonomer.

13. A process according to claim 12 wherein the process stream comprises 30-60mol% of monomer and comonomer, 5-20mol% inert hydrocarbon used as diluent or condensing agent, 5-30mol% nitrogen and 0-30mol% hydrogen.

14. A process according to any one of the preceding claims wherein there is fed to the low pressure separator a process stream comprising monomer and comonomer to be recycled, and there are recovered from the low pressure separator:
(a) a condensed liquid stream comprising at least 95wt% of the comonomer from the process stream and at least 95wt% of the fresh inert hydrocarbon/fresh comonomer and
(b) a gaseous stream comprising at least 95wt% of the monomer from the process stream.
